# EUROPÄISCHE PATENTSCHRIFT

(11) **EP 3 511 682 B1**
(45) Veröffentlichungstag und Bekanntmachung des Hinweises auf die Patenterteilung: **03.06.2020**
(21) Anmeldenummer: 18150960.5
(22) Anmeldetag: 10.01.2018
(51) Int. Cl.: G01D 11/24, G01V 8/10

(54) **GABELSENSORGEHÄUSE**
FORK SENSOR HOUSING
BOÎTIER DE CAPTEUR À FOURCHE

(43) Veröffentlichungstag der Anmeldung: 17.07.2019
(73) Patentinhaber: SICK AG, 79183 Waldkirch (DE)
(72) Erfinder: Opfolter, Matthias, 79211 Denzlingen (DE); Chua, Esther, 761426 Singapur (SG)

(56) Entgegenhaltungen:
- DE-A1- 3 008 309
- DE-A1-102005 059 859
- DE-U1-202007 002 864
- US-A- 5 672 886

## Beschreibung

Die vorliegende Erfindung betrifft ein Gabelsensorgehäuse nach dem Oberbegriff von Anspruch 1 und ein Verfahren zur Montage eines Gabelsensorgehäuses nach dem Oberbegriff von Anspruch 8. Gabelsensoren sind Einweglichtschranken oder Ultraschallsensoren, bei denen Sender und Empfänger in einem U-förmigen Gehäuse integriert sind. Dabei sitzt der Sender in einem der Schenkel, der Empfänger im gegenüberliegenden. Das zu detektierende Tastgut bewegt sich in der Aussparung dazwischen.

Je nach Anwendung bzw. Applikation werden unterschiedliche Gabelweiten und unterschiedliche Gabeltiefen benötigt, was zu einer hohen Vielfalt an mechanischen Gehäusebauformen führt.

Bedingt durch die U-förmige Grundgeometrie des Gehäuses neigt die Konstruktion bei mechanischen Beanspruchungen zum Verbiegen bzw. zur Verwindung. Mit steigender Gabelweite und gleichbleibenden Profilabmessungen bzw. Profilquerschnitt, reagiert das Sensorsystem zunehmend empfindlich auf mechanische Deformation des Gehäuses, da der Sendelichtstrahl möglicherweise nicht mehr auf den Empfänger trifft.

Zum einen gibt es zerspanend hergestellte Metallgehäuse mit Kunststoffdeckeln. Der Gehäusekörper wird spangebend aus Aluminiumhalbzeugen in den benötigten Gabelweiten und Gabeltiefen hergestellt und anschließend lackiert. Zum Abschluss der Gerätemontage werden von der Gabeltiefe abhängende, passgenaue Deckel auf die Gehäuseöffnungen aufgebracht. Hier sind die Herstellkosten aufgrund der Zerspanung relativ hoch.

Weiter existieren Gehäuse, die aus einem Stück aus Metallguss oder Kunststoffspritzguss hergestellt werden. Hier wird für jede Variante in Gabelweite und Gabeltiefe ein eigenes Werkzeug benötigt. Dafür sind sehr hohe Investitionskosten erforderlich. Weiter entsteht eine umfangreiche Lagerhaltung für eine Bevorratung aller Gehäusevarianten oder es ist nur eine geringe Variantenzahl verfügbar, so dass Kompromisse bei der Anwendung in Kauf genommen werden müssen. Speziell große Gabelweiten sind in Gusstechnologie nur begrenzt herstellbar.

Gabelsensoren mit Kunststoffgehäuse neigen aufgrund des geringen Elastizitätsmoduls mehr zu Verwindung und sind somit anfällig gegenüber mechanischen Beanspruchungen.

Die DE202007002864U1 offenbart ein Gabelgehäuse, insbesondere für Licht- oder Ultraschallschranken, mit einem ersten Gehäusearm zur Aufnahme einer Baueinheit eines ersten Wandlers, insbesondere eines Senders, mit einem zweiten Gehäusearm zur Aufnahme einer Baueinheit eines zweiten Wandlers, insbesondere eines Empfängers, gegenüberliegend zum ersten Wandler, wobei der erste Gehäusearm und der zweite Gehäusearm mechanisch so miteinander gekoppelt sind, dass durch den ersten Wandler und den zweiten Wandler ein Nachweisbereich festgelegt ist, wobei im ersten Gehäusearm und/oder im zweiten Gehäusearm Einschubprofile gebildet sind zum Einschieben und hintergreifenden Fixieren der ersten Baueinheit des ersten Wandlers bzw. der zweiten Baueinheit des zweiten Wandlers.

Die DE102005059859A1 offenbart eine Gabellichtschranke, welche ein U-förmiges Gehäuse mit einer Basis sowie mit zwei Schenkeln aufweist. Die beiden Schenkel besitzen jeweils eine Ausnehmung, welche von einem Verschlussdeckel verschlossen wird. Dieser Verschlussdeckel trägt den Sender, den Empfänger sowie weitere elektrische und/oder elektronische Bauteile.

Die US5672884A1 offenbart ein Gabelkoppler, bei dem mindestens ein Sendeelement und mindestens ein Empfangselement durch eine optische Übertragungsstrecke voneinander getrennt sind. Um einen flexiblen Aufbau mit variablen Eigenschaften zu gewährleisten, besitzt der Gabelkoppler einen modularen Aufbau aus zwei zusammensetzbaren Gehäuseteilen. Um die Herstellungskosten zu senken und das Herstellverfahren zu vereinfachen, weisen die Gehäuseteile des Gabelkopplers jeweils einen als Teilstück eines Montagestreifens ausgebildeten Trägerkörper auf, mindestens ein auf dem Trägerkörper angeordnetes Halbleiterelement, und einen die beiden Seitenflächen des Gabelkopplers bildenden Gehäusekörper, der in einem ersten, das (die) Halbleiterelement(e) enthaltenden Teilbereich des Trägerkörpers den Trägerkörper umschließt; mindestens ein Halbleiterelement des einen Gehäuseteils ist dabei als Sendeelement ausgebildet und mindestens ein Halbleiterelement des anderen Gehäuseteils ist als Empfangselement ausgebildet. Um die beiden Gehäuseteile auf einfache Weise zusammensetzen zu können, weist mindestens eines der beiden Gehäuseteile mindestens ein auf dem Gehäusekörper aufgebrachtes und die Grundfläche des Gabelkopplers bildendes Verbindungsteil auf, über das die beiden Gehäuseteile bündig miteinander verbunden sind.

Eine Aufgabe der Erfindung besteht darin, die oben genannten Nachteile zu vermeiden und einen verbesserten Gabelsensor bzw. ein verbessertes Gabelsensorgehäuse bereitzustellen.

Die Aufgabe wird gemäß Anspruch 1 gelöst durch ein Gabelsensorgehäuse, wobei ein Sendemodulgehäuse und ein Empfangsmodulgehäuse parallel und beabstandet angeordnet sind, wobei das Sendemodulgehäuse und das Empfangsmodulgehäuse mechanisch mit mindestens einem mechanischen Verbindungselement aus Metall verbunden sind, wobei das mechanische Verbindungselement quer zu dem Sendemodulgehäuse und quer zu dem Empfangsmodulgehäuse angeordnet ist und mindestens ein elektrisches Verbindungselement und/oder ein optisches Verbindungselement zwischen dem Sendemodulgehäuse und dem Empfangsmodulgehäuse angeordnet ist, wodurch ein modular aufgebautes U-förmiges Gabelsensorgehäuse gebildet ist, wobei das mechanische Verbindungselement als Blechbiegeteil ausgeführt ist und U-förmig ausgebildet ist, wobei eine Biegung des Blechbiegeteils an einer Unterseite, an einer Innenseite, an einer Außenseite oder an einer Oberseite des Blechbiegeteils vorgesehen ist.

Die Aufgabe wird weiter gelöst durch ein Verfahren gemäß Anspruch 8 zur Montage eines Gabelsensorgehäuse, wobei ein Sendemodulgehäuse und ein Empfangsmodulgehäuse parallel und beabstandet angeordnet werden, wobei das Sendemodulgehäuse und das Empfangsmodulgehäuse mechanisch mit mindestens einem mechanischen Verbindungselement aus Metall verbunden wird, wobei das mechanische Verbindungselement quer zu dem Sendemodulgehäuse und quer zu dem Empfangsmodulgehäuse angeordnet wird, und mindestens ein elektrisches Verbindungselement und/oder ein optisches Verbindungselement zwischen dem Sendemodulgehäuse und dem Empfangsmodulgehäuse angeordnet wird, wodurch ein modular aufgebautes U-förmiges Gabelsensorgehäuse gebildet wird, wobei das mechanische Verbindungselement als Blechbiegeteil ausgeführt wird und U-förmig ausgebildet ist, wobei eine Biegung des Blechbiegeteils an einer Unterseite, an einer Innenseite, an einer Außenseite oder an einer Oberseite des Blechbiegeteils vorgesehen ist. Gemäß der Erfindung sind unterschiedliche Sendemodulgehäuse, unterschiedliche Empfangsmodulgehäuse, unterschiedliche mechanische Verbindungselemente, unterschiedliche elektrische Verbindungselemente und unterschiedliche optische Verbindungselemente vorgesehen, die jeweils miteinander kombinierbar sind.

Gemäß der Erfindung ist ein modularer Gehäuseaufbau bereitgestellt. Durch eine geringe Anzahl von Bauteilen oder Elementen kann eine große Varianz an Endgeräten erzeugt werden. Das Baukastensystem erlaubt eine einfache Erzeugung neuer Gerätevarianten in der Konstruktion. Weiter ist eine späte Variantenbildung möglich durch eine Montage weniger Module in einer Endmontage in der Produktion. Weiter sind die Werkzeuginitialkosten bei dem Baukastensystem gering. Weiter liegt eine geringe Lagerhaltung bei dem Baukastensystem vor.

Das Gabelsensorgehäuse wird in einer Endmontage aus mehreren Komponenten zusammengesetzt. Dabei werden für jede Gabeltiefe ein Sendemodulgehäuse und ein Empfangsmodulgehäuse benötigt. Für diese Module ist die Gabelweite nicht relevant. Das Sendemodulgehäuse und das Empfangsmodulgehäuse bestehen jeweils aus einem nach außen geschlossenem Gehäuse und den innen liegenden optoelektronischen Komponenten des Sensors.

Die für die Modulgehäuse benötigten Komponenten sind als werkzeuggebundene Kunststoff-Spritzgussteile ausgeführt. Die Kunststoffgehäuse können einfach aus eingefärbtem Kunststoff hergestellt werden, wodurch eine kostengünstigere Farbgebung gegenüber einer Lackierung von Metallteilen möglich ist.

Zur Verbindung der zwei Modulgehäuse werden für jede Gabelweite mindestens ein mechanisches und mindestens ein elektrisches bzw. optisches Verbindungselement benötigt, um beispielsweise eine Stromversorgung oder eine Kommunikationsverbindung im Falle des elektrischen Verbindungselements zu ermöglichen. Das optische Verbindungselement ist für eine Kommunikationsverbindung vorgesehen.

Das mechanische Verbindungselement ist als Blechbiegeteil ausgeführt. Dieses kann für große Stückzahlen werkzeuggebunden in einem Stanz-Biege-Werkzeug hergestellt werden oder für kleine Stückzahlen CNC-gelasert oder CNC-gebogen werden.

Die elektrische bzw. optische Verbindung kann vorkonfektioniert oder im Montageablauf auf die benötigte Gabelweite abgelängt werden. Es kann dabei eine elektrische oder optische Leitung oder eine elektrische oder optische Verbindung mittels eines Steckverbinders vorgesehen werden.

Das Sende- und Empfangsmodulgehäuse werden in der Montage mit dem mechanischen Verbindungselement, beispielsweise durch das Blechbiegeteil zu einer Einheit gefügt und an den Schnittstellen mittels Kraft-, Form- oder Stoffschluss verbunden.

Die werkzeuggebundene Herstellung der Einzelteile führt zu einer Kosteneinsparung gegenüber spangebenden Verfahren oder einer Vorbaugruppenmontage.

In Weiterbildung der Erfindung sind zwei mechanische Verbindungselemente parallel beabstandet zueinander angeordnet. Dadurch wird das Gabelsensorgehäuse stabiler ausgeführt und eine Verwindungssteifigkeit erhöht. Die mechanischen Verbindungselemente können dabei auch in einem Verbindungsabschnitt im Querschnitt L-förmig ausgebildet sein, wodurch die Elemente stabiler ausgebildet sind.

Bevorzugt sind die mechanischen Verbindungselemente flach ausgebildet. Dadurch können die mechanischen Verbindungselemente sehr einfach und preiswert als Stanzteile hergestellt werden.

In Weiterbildung der Erfindung sind mindestens zwei mechanische Verbindungselemente mittels eines Formschlusses miteinander verbunden, beispielsweise weisen die Verbindungselemente eine Verzahnung auf. Mit der Verzahnung sind jeweils zwei mechanische Verbindungselemente miteinander verbindbar, so dass ein stabiler Formschluss entsteht. Dadurch wird weiter auch ein geschlossenes Profil durch zwei mechanische Verbindungselemente gebildet, wodurch eine Verwindungssteifigkeit erhöht wird.

In Weiterbildung der Erfindung sind mindestens zwei mechanische Verbindungselemente mittels eines Stoffschlusses miteinander verbunden, beispielsweise mittels einer Schweißnaht miteinander verbunden. Mit dieser Maßnahme kann eine zu massiven Metallgehäusen vergleichbare Verwindungssteifigkeit erzielt werden.

Gemäß der Erfindung ist das mechanische Verbindungselement U-förmig ausgebildet, wodurch eine Stabilität und Verwindungssteifigkeit erhöht wird. Das U-förmige Verbindungselement wird durch Biegung erzeugt. Die Biegungen können dabei an einer Unterseite, an einer Innenseite, an einer Außenseite oder an einer Oberseite vorgesehen sein.

In Weiterbildung der Erfindung ist am Sendermodulgehäuse oder am Empfangsmodulgehäuse ein Anschlussmodul angeordnet. Das Anschlussmodul kann dabei unterschiedlich ausgebildet sein, wodurch ebenfalls eine modulare Gestaltung der Anschlusstechnik vorliegt. Bei dem Anschlussmodul kann es sich beispielsweise um einen modularen Leitungsanschluss, um einen modularen M12 Buchsenanschluss oder um einen modularen M8 Buchsenanschluss handeln.

Gemäß einer Weiterbildung der Erfindung ist das mechanische Verbindungselement mit dem Sendemodulgehäuse und dem Empfangsmodulgehäuse mittels Verschraubung, mittels Einpressverbinder und/oder mittels Einpresshülse mit Loch verbunden. Bei Verwendung von Einpressverbindern können in einem Pressvorgang alle Verbindungen hergestellt werden. Bei einer Ausführung mit Einpresshülse kann ein Loch in der Einpresshülse auch als Befestigungsbohrung für die Anbringung des Sensors in der Applikation genutzt werden.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

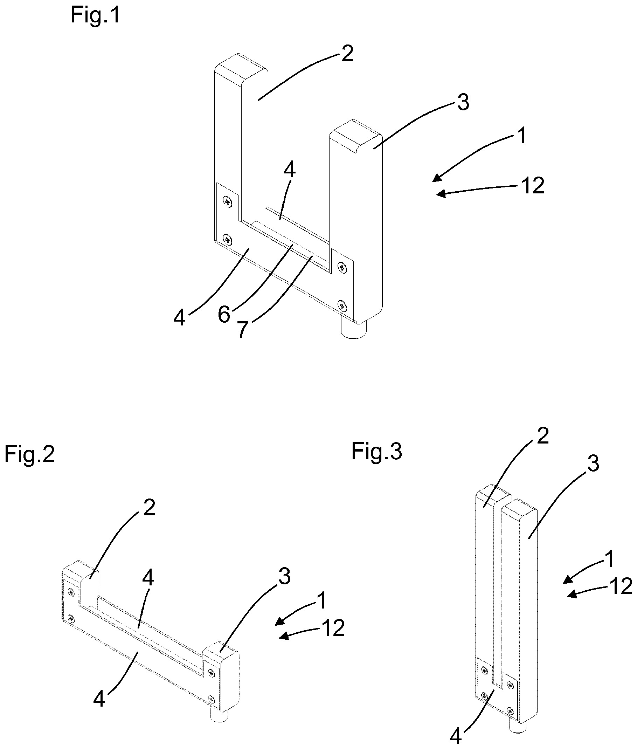

Figur 1 bis 18 jeweils verschiedene Ausführungsformen eines Gabelsensorgehäuses bzw. eines Gabelsensors und Verfahren zur Montage eines Gabelsensorgehäuses bzw. eines Gabelsensors.

In den nachfolgenden Figuren sind identische Teile mit identischen Bezugszeichen versehen.

Figur 1 zeigt ein Gabelsensorgehäuse 1 bzw. einen Gabelsensor 12, wobei ein Sendemodulgehäuse 2 und ein Empfangsmodulgehäuse 3 parallel und beabstandet angeordnet sind, wobei das Sendemodulgehäuse 2 und das Empfangsmodulgehäuse 3 mechanisch mit mindestens einem mechanischen Verbindungselement 4 aus Metall verbunden sind, wobei das mechanische Verbindungselement 4 quer zu dem Sendemodulgehäuse 2 und quer zu dem Empfangsmodulgehäuse 3 angeordnet ist und mindestens ein elektrisches Verbindungselement 6 und/oder ein optisches Verbindungselement 7 zwischen dem Sendemodulgehäuse 2 und dem Empfangsmodulgehäuse 3 angeordnet ist, wodurch ein modular aufgebautes U-förmiges Gabelsensorgehäuse 1 gebildet ist.

Der Gabelsensor 12 kann beispielsweise als Gabellichtschranke, beispielsweise als Einweglichtschranke oder beispielsweise als Gabelultraschallsensor ausgebildet sein.

Das Sendemodulgehäuse 2 und das Empfangsmodulgehäuse 3 bestehen jeweils aus einem nach außen geschlossenem eigenständigen Gehäuse und den innenliegenden optoelektronischen Komponenten des Sensors.

Zur Verbindung der zwei Modulgehäuse 2 und 3 sind zwei mechanische Verbindungselemente 4 und ein elektrisches Verbindungselement 6 bzw. ein optisches Verbindungselement 7 angeordnet. Das mechanische Verbindungselement 4 ist als Blechteil ausgeführt.

Bei der elektrischen bzw. optischen Verbindung kann eine elektrische oder optische Leitung oder eine elektrische oder optische Verbindung mittels eines Steckverbinders vorgesehen werden.

Das Sendemodulgehäuse 2 und das Empfangsmodulgehäuse 3 werden in der Montage mit dem mechanisches Verbindungselement 4, beispielsweise durch das Blechteil zu einer Einheit gefügt und an den Schnittstellen mittels Kraft-, Form- oder Stoffschluss verbunden.

Gemäß Figur 1 sind zwei mechanische Verbindungselemente 4 parallel beabstandet zueinander angeordnet. Gemäß Figur 1 sind die mechanischen Verbindungselemente 4 flach ausgebildet.

Figur 2 und Figur 3 zeigen jeweils ein Gabelsensorgehäuse 1 gemäß Figur 1, jedoch im Fall von Figur 2 mit einer geringeren Gabeltiefe und im Fall von Figur 3 mit einer geringeren Gabelweite als in Figur 1 dargestellt. Dabei sind die mechanischen Verbindungselemente 4 gemäß Figur 1 und Figur 2 identisch. Weiter sind die Sendemodulgehäuse 2 und die Empfangsmodulgehäuse 3 gemäß Figur 1 und Figur 3 identisch.

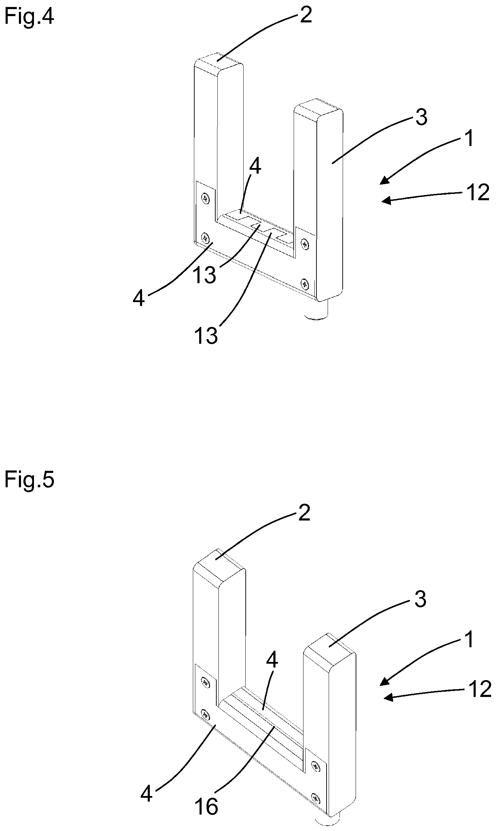

Gemäß Figur 4 sind zwei mechanische Verbindungselemente 4 mittels eines Formschlusses miteinander verbunden. Die mechanischen Verbindungselemente 4 weisen eine Verzahnung 13 auf. Mit der Verzahnung 13 sind die zwei mechanischen Verbindungselemente 4 miteinander verbunden, so dass ein stabiler Formschluss entsteht. Dadurch kann weiter auch ein geschlossenes Profil durch zwei mechanische Verbindungselemente 4 gebildet werden, wodurch eine Verwindungssteifigkeit erhöht wird.

Gemäß Figur 5 sind die mechanischen Verbindungselemente 4 in einem Verbindungsabschnitt im Querschnitt L-förmig ausgebildet sein. Gemäß Figur 5 sind zwei mechanische Verbindungselemente 4 mittels eines Stoffschlusses miteinander verbunden, nämlich mittels einer Schweißnaht 16 miteinander verbunden.

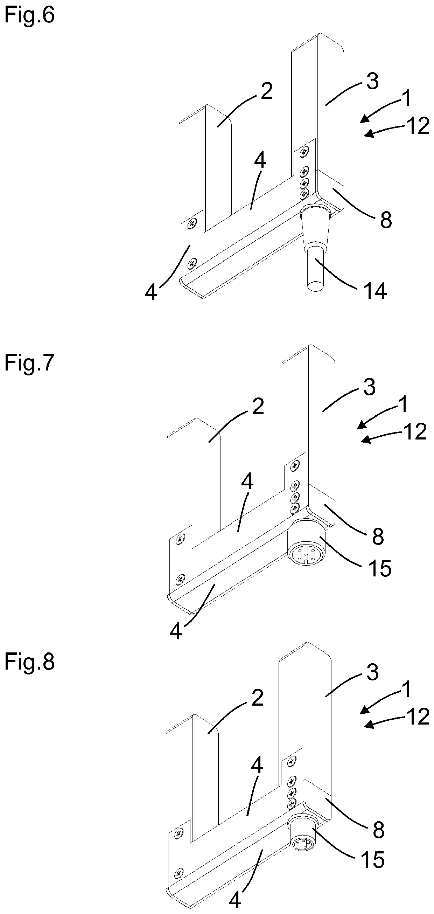

Gemäß Figur 6 ist am Empfangsmodulgehäuse 3 ein Anschlussmodul 8 angeordnet. Jedoch kann das Anschlussmodul 8 auch am Sendermodulgehäuse 2 angeordnet sein.

Gemäß Figur 6 ist das Anschlussmodul 8 als Leitungsanschluss ausgebildet. Gemäß Figur 7 weist das Anschlussmodul einen M12 Buchsenanschluss auf. Gemäß Figur 8 weist das Anschlussmodul einen M8 Buchsenanschluss auf.

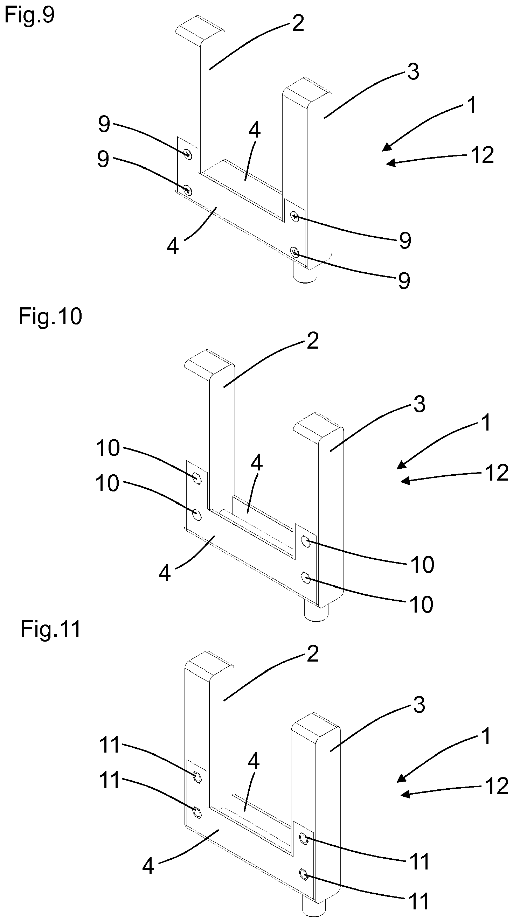

Gemäß Figur 9 ist das mechanische Verbindungselement 4 mit dem Sendemodulgehäuse 2 und dem Empfangsmodulgehäuse 3 mittels Verschraubung 9 verbunden.

Gemäß Figur 10 ist das mechanische Verbindungselement 4 mit dem Sendemodulgehäuse 2 und dem Empfangsmodulgehäuse 3 mittels Einpressverbinder 10 verbunden. Bei Verwendung von Einpressverbindern 10 können in einem Pressvorgang alle Verbindungen hergestellt werden.

Figur 11 zeigt eine Verbindung mittels Einpresshülse 11 mit Loch. Bei der Ausführung mit Einpresshülse 11 kann ein Loch in der Einpresshülse 11 auch als Befestigungsbohrung für die Anbringung des Sensors in der Applikation genutzt werden.

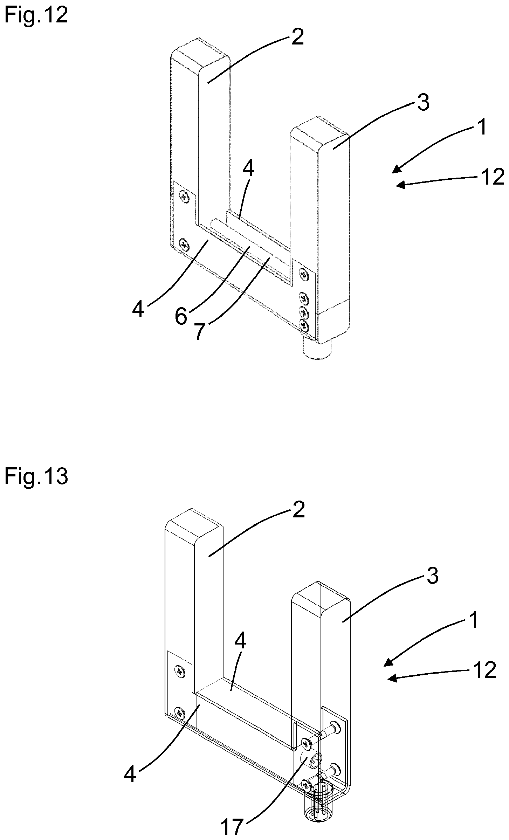

Gemäß Figur 12 ist eine elektrisches Verbindungselement 6 und/oder ein optisches Verbindungselement 7 als Leitung bzw. als Kabel vorgesehen.

Gemäß Figur 13 ist ein elektrisches Verbindungselement 6 und/oder ein optisches Verbindungselement 7 mittels eines Steckverbinders 17 vorgesehen.

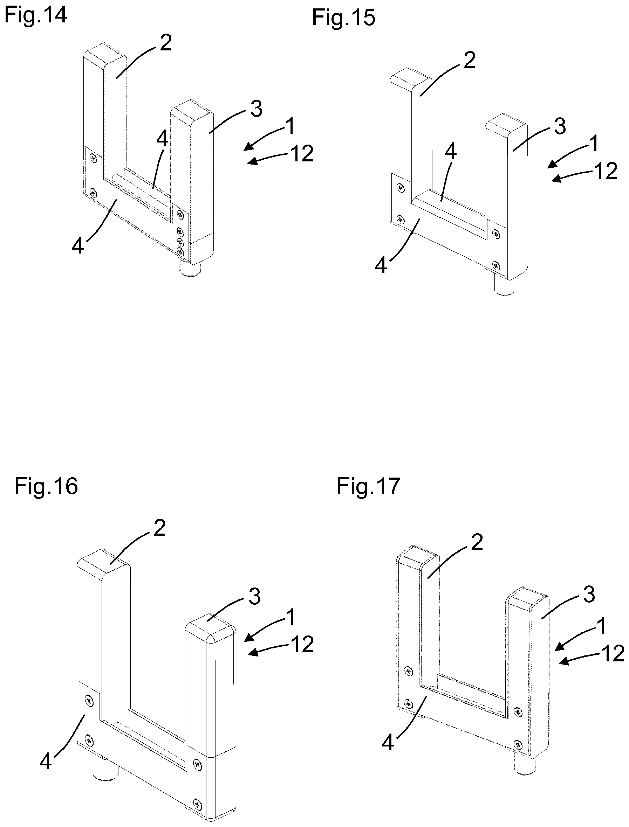

Gemäß den Figuren 14 bis 17 sind die mechanischen Verbindungselemente 4 U-förmig ausgebildet. Gemäß Figur 14 ist die Biegung an einer Unterseite des mechanischen Verbindungselementes 4 vorgesehen. Gemäß Figur 15 ist die Biegung an einer Innenseite des mechanischen Verbindungselementes 4 vorgesehen. Gemäß Figur 16 ist die Biegung an einer Außenseite des mechanischen Verbindungselementes 4 vorgesehen. Gemäß Figur 17 ist die Biegung an einer Oberseite des mechanischen Verbindungselementes 4 vorgesehen.

Bezugszeichen:
1 Gabelsensorgehäuse
2 Sendemodulgehäuse
3 Empfangsmodulgehäuse
4 mechanisches Verbindungselement
6 elektrisches Verbindungselement
7 optisches Verbindungselement
8 Anschlussmodul
9 Verschraubung
10 Einpressverbinder
11 Einpresshülse
12 Gabelsensor
13 Verzahnung
14 Leitungsanschluss
15 Buchsenanschluss
16 Schweißnaht
17 Steckverbinder

## Patentansprüche

1. Gabelsensorgehäuse (1),
wobei ein Sendemodulgehäuse (2) und ein Empfangsmodulgehäuse (3) parallel und beabstandet angeordnet sind,
wobei das Sendemodulgehäuse (2) und das Empfangsmodulgehäuse (3) mechanisch mit mindestens einem mechanischen Verbindungselement (4) aus Metall verbunden sind,
wobei das mechanische Verbindungselement (4) quer zu dem Sendemodulgehäuse (2) und quer zu dem Empfangsmodulgehäuse (3) angeordnet ist,
und mindestens ein elektrisches Verbindungselement (6) und/oder ein optisches Verbindungselement (7) zwischen dem Sendemodulgehäuse (2) und dem Empfangsmodulgehäuse (3) angeordnet ist,
wodurch ein modular aufgebautes U-förmiges Gabelsensorgehäuse (1) gebildet ist, **dadurch gekennzeichnet, dass** das mechanische Verbindungselement (4) als Blechbiegeteil ausgeführt ist und U-förmig ausgebildet ist, wobei eine Biegung des Blechbiegeteils an einer Unterseite, an einer Innenseite, an einer Außenseite oder an einer Oberseite des Blechbiegeteils vorgesehen ist.

2. Gabelsensorgehäuse (1) nach Anspruch 1, **dadurch gekennzeichnet, dass** zwei mechanische Verbindungselemente (4) parallel beabstandet zueinander angeordnet sind.

3. Gabelsensorgehäuse (1) nach Anspruch 2, **dadurch gekennzeichnet, dass** die mechanischen Verbindungselemente (4) flach ausgebildet sind.

4. Gabelsensorgehäuse (1) nach mindestens einem der vorgenannten Ansprüche, **dadurch gekennzeichnet, dass** mindestens zwei mechanische Verbindungselemente (4) mittels eines Formschlusses miteinander verbunden sind.

5. Gabelsensorgehäuse (1) nach mindestens einem der vorgenannten Ansprüche, **dadurch gekennzeichnet, dass** mindestens zwei mechanische Verbindungselemente (4) mittels eines Stoffschlusses miteinander verbunden sind.

6. Gabelsensorgehäuse (1) nach mindestens einem der vorgenannten Ansprüche, **dadurch gekennzeichnet, dass** am Sendemodulgehäuse (2) oder am Empfangsmodulgehäuse (3) ein Anschlussmodul (8) angeordnet ist.

7. Gabelsensorgehäuse (1) nach mindestens einem der vorgenannten Ansprüche, **dadurch gekennzeichnet, dass** das mechanische Verbindungselement (4) mit dem Sendemodulgehäuse (2) und dem Empfangsmodulgehäuse (3) mittels Verschraubung (9), mittels Einpressverbinder (10) und/oder mittels Einpresshülse (11) mit Loch verbunden ist.

8. Verfahren zur Montage eines Gabelsensorgehäuses (1),
wobei ein Sendemodulgehäuse (2) und ein Empfangsmodulgehäuse (3) parallel und beabstandet angeordnet werden,
wobei das Sendemodulgehäuse (2) und das Empfangsmodulgehäuse (3) mechanisch mit mindestens einem mechanischen Verbindungselement (4) aus Metall verbunden werden,
wobei das mechanische Verbindungselement (4) quer zu dem Sendemodulgehäuse (2) und quer zu dem Empfangsmodulgehäuse (3) angeordnet wird,
und mindestens ein elektrisches Verbindungselement (6) und/oder ein optisches Verbindungselement (7) zwischen dem Sendemodulgehäuse (2) und dem Empfangsmodulgehäuse (3) angeordnet wird,
wodurch ein modular aufgebautes U-förmiges Gabelsensorgehäuse (1) gebildet wird, **dadurch gekennzeichnet, dass** das mechanische Verbindungselement (4) als Blechbiegeteil ausgeführt wird und U-förmig ausgebildet ist, wobei eine Biegung des Blechbiegeteils an einer Unterseite, an einer Innenseite, an einer Außenseite oder an einer Oberseite des Blechbiegeteils vorgesehen ist.

9. Verfahren nach Anspruch 8, **dadurch gekennzeichnet, dass** zwei mechanische Verbindungselemente (4) parallel beabstandet zueinander angeordnet werden.

10. Verfahren nach Anspruch 9, **dadurch gekennzeichnet, dass** die mechanischen Verbindungselemente (4) flach ausgebildet werden.

11. Verfahren nach mindestens einem der vorgenannten Ansprüche 8 bis 10, **dadurch gekennzeichnet, dass** mindestens zwei mechanische Verbindungselemente (4) formschlüssig miteinander verbunden werden.

12. Verfahren nach mindestens einem der vorgenannten Ansprüche 8 bis 11, **dadurch gekennzeichnet, dass** mindestens zwei mechanische Verbindungselemente (4) stoffschlüssig miteinander verbunden werden.

13. Verfahren nach mindestens einem der vorgenannten Ansprüche 8 bis 12, **dadurch gekennzeichnet, dass** am Sendemodulgehäuse (2) oder am Empfangsmodulgehäuse (3) ein Anschlussmodul (8) angeordnet wird.

14. Verfahren nach mindestens einem der vorgenannten Ansprüche 8 bis 13, **dadurch gekennzeichnet, dass** das mechanische Verbindungselement (4) mit dem Sendemodulgehäuse (2) und dem Empfangsmodulgehäuse (3) mittels Verschraubung (9), mittels Einpressverbinder (10) und/oder mittels Einpresshülse (11) mit Loch verbunden wird.

## Claims

1. A fork sensor housing (1),
wherein a transmission module housing (2) and a reception module housing (3) are arranged in parallel and spaced apart;
wherein the transmission module housing (2) and the reception module housing (3) are mechanically connected to at least one mechanical connection element (4) composed of metal;
wherein the mechanical connection element (4) is arranged transversely to the transmission module housing (2) and transversely to the reception module housing (3),
and at least one electrical connection element (6) and/or an optical connection element (7) is/are arranged between the transmission module housing (2) and the reception module housing (3),
whereby a U-shaped fork sensor housing (1) of modular design is formed, **characterized in that** the mechanical connection element (4) is formed as a bent sheet metal part and is configured in U shape, with a bend of the bent sheet metal part being provided at a lower side, at an inner side, at an outer side, or at an upper side of the bent sheet metal part.

2. A fork sensor housing (1) in accordance with claim 1, **characterized in that** two mechanical connection elements (4) are arranged in parallel spaced apart from one another.

3. A fork sensor housing (2) in accordance with claim 2, **characterized in that** the mechanical connection elements (4) are formed as flat.

4. A fork sensor housing (1) in accordance with at least one of the preceding claims, **characterized in that** at least two mechanical connection elements (4) are connected to one another by means of shape matching.

5. A fork sensor housing (1) in accordance with at least one of the preceding claims, **characterized in that** at least two mechanical connection elements (4) are connected to one another by means of material continuity.

6. A fork sensor housing (1) in accordance with at least one of the preceding claims, **characterized in that** a connection module (8) is arranged at the transmission module housing (2) or at the reception module housing (3).

7. A fork sensor housing (1) in accordance with at least one of the preceding claims, **characterized in that** the mechanical connection element (4) is connected to the transmission module housing (2) and to the reception module housing (3) by means of a screw connection (9), by means of a press-in connection (10), and/or by means of a press-in sleeve (11) with hole.

8. A method of installing a fork sensor housing (1),
wherein a transmission module housing (2) and a reception module housing (3) are arranged in parallel and spaced apart;
wherein the transmission module housing (2) and the reception module housing (3) are mechanically connected to at least one mechanical connection element (4) composed of metal;
wherein the mechanical connection element (4) is arranged transversely to the transmission module housing (2) and transversely to the reception module housing (3),
and at least one electrical connection element (6) and/or an optical connection element (7) is/are arranged between the transmission module housing (2) and the reception module housing (3),
whereby a U-shaped fork sensor housing (1) of modular design is formed, **characterized in that** the mechanical connection element (4) is formed as a bent sheet metal part and is configured in U shape, with a bend of the bent sheet metal part being provided at a lower side, at an inner side, at an outer side, or at an upper side of the bent sheet metal part.

9. A method in in accordance with claim 8, **characterized in that** two mechanical connection elements (4) are arranged in parallel spaced apart from one another.

10. A method in accordance with claim 9, **characterized in that** the mechanical connection elements (4) are formed as flat.

11. A method in in accordance with at least one of the preceding claims 8 to 10, **characterized in that** at least two mechanical connection elements (4) are connected to one another by means of shape matching.

12. A method in in accordance with at least one of the preceding claims 8 to 11, **characterized in that** at least two mechanical connection elements (4) are connected to one another by means of material continuity.

13. A method in accordance with at least one of the preceding claims 8 to 12, **characterized in that** a connection module (8) is arranged at the transmission module housing (2) or at the reception module housing (3).

14. A method in accordance with at least one of the preceding claims 8 to 13, **characterized in that** the mechanical connection element (4) is connected to the transmission module housing (2) and to the reception module housing (3) by means of a screw connection (9), by means of a press-in connection (10), and/or by means of a press-in sleeve (11) with hole.

## Revendications

1. Boîtier de capteur à fourche (1),
dans lequel un boîtier de module émetteur (2) et un boîtier de module récepteur (3) sont disposés parallèlement et à distance l'un de l'autre,
le boîtier de module émetteur (2) et le boîtier de module récepteur (3) sont reliés mécaniquement par au moins un élément de liaison mécanique (4) en métal,
l'élément de liaison mécanique (4) est disposé transversalement au boîtier de module émetteur (2) et transversalement au boîtier de module récepteur (3), et
au moins un élément de connexion électrique (6) et/ou un élément de connexion optique (7) est disposé entre le boîtier de module émetteur (2) et le boîtier de module récepteur (3),
moyennant quoi est formé un boîtier de capteur à fourche (1) de construction modulaire en forme de U,
**caractérisé en ce que**
l'élément de liaison mécanique (4) est réalisé sous forme de pièce pliée en tôle et est en forme de U, un coude de la pièce pliée en tôle étant prévu sur un côté inférieur, sur un côté intérieur, sur un côté extérieur ou sur un côté supérieur de la pièce pliée en tôle.

2. Boîtier de capteur à fourche (1) selon la revendication 1, **caractérisé en ce que** deux éléments de liaison mécaniques (4) sont disposés parallèlement et à distance l'un de l'autre.

3. Boîtier de capteur à fourche (1) selon la revendication 2, **caractérisé en ce que** les éléments de liaison mécaniques (4) sont réalisés plats.

4. Boîtier de capteur à fourche (1) selon l'une au moins des revendications précédentes, **caractérisé en ce que** au moins deux éléments de liaison mécaniques (4) sont reliés entre eux par coopération de forme.

5. Boîtier de capteur à fourche (1) selon l'une au moins des revendications précédentes, **caractérisé en ce que** au moins deux éléments de liaison mécaniques (4) sont reliés entre eux par coopération de matière.

6. Boîtier de capteur à fourche (1) selon l'une au moins des revendications précédentes, **caractérisé en ce que** un module de raccordement (8) est disposé sur le boîtier de module émetteur (2) ou sur le boîtier de module récepteur (3).

7. Boîtier de capteur à fourche (1) selon l'une au moins des revendications précédentes, **caractérisé en ce que** l'élément de liaison mécanique (4) est relié au boîtier de module émetteur (2) et au boîtier de module récepteur (3) par un vissage (9), par un connecteur à enfoncer (10) et/ou par un manchon à enfoncer (11) ayant un trou.

8. Procédé d'assemblage d'un boîtier de capteur à fourche (1),
dans lequel un boîtier de module émetteur (2) et un boîtier de module récepteur (3) sont disposés parallèlement et à distance l'un de l'autre,
le boîtier de module émetteur (2) et le boîtier de module récepteur (3) sont reliés mécaniquement par au moins un élément de liaison mécanique (4) en métal,
l'élément de liaison mécanique (4) est disposé transversalement au boîtier de module émetteur (2) et transversalement au boîtier de module récepteur (3), et
au moins un élément de connexion électrique (6) et/ou un élément de connexion optique (7) est disposé entre le boîtier de module émetteur (2) et le boîtier de module récepteur (3),
moyennant quoi est formé un boîtier de capteur à fourche (1) de construction modulaire en forme de U,
**caractérisé en ce que**
l'élément de liaison mécanique (4) est réalisé sous forme de pièce pliée en tôle et est en forme de U, un coude de la pièce pliée en tôle étant prévu sur un côté inférieur, sur un côté intérieur, sur un côté extérieur ou sur un côté supérieur de la pièce pliée en tôle.

9. Procédé selon la revendication 8, **caractérisé en ce que** deux éléments de liaison mécaniques (4) sont disposés parallèlement et à distance l'un de l'autre.

10. Procédé selon la revendication 9, **caractérisé en ce que** les éléments de liaison mécaniques (4) sont réalisés plats.

11. Procédé selon l'une au moins des revendications 8 à 10, **caractérisé en ce que** au moins deux éléments de liaison mécaniques (4) sont reliés entre eux par coopération de forme.

12. Procédé selon l'une au moins des revendications précédentes 8 à 11, **caractérisé en ce que** au moins deux éléments de liaison mécaniques (4) sont reliés entre eux par coopération de matière.

13. Procédé selon l'une au moins des revendications précédentes 8 à 12, **caractérisé en ce que** un module de raccordement (8) est disposé sur le boîtier de module émetteur (2) ou sur le boîtier de module récepteur (3).

14. Procédé selon l'une au moins des revendications précédentes 8 à 13, **caractérisé en ce que** l'élément de liaison mécanique (4) est relié au boîtier de module émetteur (2) et au boîtier de module récepteur (3) par un vissage (9), par un connecteur à enfoncer (10) et/ou par un manchon à enfoncer (11) ayant un trou.
